# EUROPÄISCHE PATENTANMELDUNG

(11) **EP 3 633 158 A1**
(43) Veröffentlichungstag der Anmeldung: **08.04.2020**
(21) Anmeldenummer: 19200893.6
(22) Anmeldetag: 01.10.2019
(51) Int. Cl.: F01N 3/20

(54) **KÜHLMITTELKREIS MIT INTEGRIERTEM DOSIERMODUL, VERFAHREN ZUR KÜHLUNG EINES IN EINEM KÜHLMITTELKREIS INTEGRIERTEN DOSIERMODULS**

(30) Priorität: 02.10.2018 DE 102018124380
(71) Anmelder: Robert Bosch GmbH, 70469 Stuttgart-Feuerbach (DE); FPT Motorenforschung AG, 9320 Arbon (CH)
(72) Erfinder: HAGIN, Harald, 8280 Kreuzlingen (CH); SCHWARZ, Sebastian, 8580 Amriswil (CH); LEONHARD, Max, 70469 Stuttgart (DE); RANKEL, Thorsten, 71229 Leonberg (DE); PETERSON, Andrew, 70192 Stuttgart (DE)
(74) Vertreter: Kietzmann, Lutz

(57) **Zusammenfassung**

Die Erfindung betrifft einen Kühlmittelkreis (1) mit einem integrierten Dosiermodul (2) für einen Hilfsstoff, insbesondere für eine Harnstoff-WasserLösung (HWL), wobei das Dosiermodul (2) an einem Abgasrohr (3) eines Verbrennungsmotors (4) angeordnet ist und einen Kühlkörper (5) aufweist, der über einen Einlass (6) und einen Auslass (7) an den Kühlmittelkreis angebunden ist, so dass der Kühlkörper (5) im Betrieb des Verbrennungsmotors (4) von einem Kühlmittel des Kühlmittelkreises (1) durchströmt wird, ferner umfassend eine in den Kühlmittelkreis eingebundene Wärmesenke (8) und/oder Wärmequelle (9). Erfindungsgemäß ist in der Einbaulage des Dosiermoduls (2) der Auslass (7) des Kühlkörpers (5) näher am Abgasrohr (3) angeordnet als der Einlass (6).

Die Erfindung betrifft ferner ein Verfahren zur Kühlung eines in einen Kühlmittelkreis (1) integrierten Dosiermoduls (2) für einen Hilfsstoff.

## Beschreibung

Die Erfindung betrifft einen Kühlmittelkreis mit einem integrierten Dosiermodul für einen Hilfsstoff gemäß dem Oberbegriff des Anspruchs 1. Die Erfindung betrifft ferner ein Verfahren zur Kühlung eines in einen Kühlmittelkreis integrierten Dosiermoduls.

Das Dosiermodul dient dem Eindosieren eines Hilfsstoffs, insbesondere einer Harnstoff-Wasser-Lösung (HWL), in ein Abgasrohr eines Verbrennungsmotors, um die katalytische Reduktion von Stickoxiden in einem nachgeschalteten SCR ("Selektiv Catalytic Reduktion")-Katalysator zu ermöglichen. Das Dosiermodul ist hierzu am Abgasrohr angeordnet. Dies führt zu einer sehr hohen thermischen Belastung des Dosiermoduls während des Betriebs des Verbrennungsmotors. Um die Einhaltung kritischer Bauteiltemperaturen und damit die Funktionalität des Dosiermoduls zu gewährleisten, wird dieses gekühlt. Die Kühlung erfolgt mit Hilfe eines Kühlmittelkreises, in den das Dosiermodul integriert ist.

### Stand der Technik

Aus der Offenlegungsschrift DE 10 2014 015 750 A1 ist bereits eine Kühlanordnung für ein Fahrzeug mit einer Dosiereinrichtung bekannt, mittels welcher ein Reduktionsmittel in einen Abgasstrang des Fahrzeugs einbringbar ist, um den Gehalt an Stickoxiden im Abgas zu verringern. Die Dosiereinrichtung ist hierzu in einem Kühlmittelkreis angeordnet, der im Betrieb der Kühlanordnung von einem Kühlmittel durchströmt ist. Zur Verbesserung der Kühlung wird ein Kühlmittelkreis vorgeschlagen, der separat ausgebildet und insbesondere von einem weiteren Kühlmittelkreis des Fahrzeugs getrennt ist. Der die Dosiereinrichtung umfassende Kühlmittelkreis dient demnach lediglich der Kühlung der Dosiereinrichtung, so dass diese individuell gekühlt werden kann. Des Weiteren entfällt eine Anbindung der Dosiereinrichtung an einen weiteren Kühlmittelkreis des Fahrzeugs, beispielsweise an einen Kühlmittelkreis zur Kühlung des Verbrennungsmotors, so dass ein Druckverlust in dem weiteren Kühlmittelkreis verhindert wird. Ferner wird eine unzureichende Kühlung der Dosiereinrichtung vermieden, wenn das Fahrzeug mit noch heißer Abgasanlage abgestellt und das Kühlmittel des weiteren Kühlmittelkreises, also des Fahrzeug-Kühlmittelkreises, lediglich über eine vergleichsweise kurze Zeitspanne hinweg durch die Dosiereinrichtung gefördert wird.

Zutreffend ist, dass nach dem Abstellen des Verbrennungsmotors und einer in den Kühlmittelkreis des Verbrennungsmotors integrierten Kühlmittelpumpe in Ermangelung eines zirkulierenden Kühlmittels keine Wärme mehr abgeführt wird. Das Abgasrohr und die unmittelbare Umgebung können jedoch noch immer sehr heiß sein und dadurch das Dosiermodul über die erlaubten Betriebstemperaturen hinaus erhitzen.

Ausgehend von dem vorstehend genannten Stand der Technik liegt der vorliegenden Erfindung die Aufgabe zugrunde, die Kühlung eines Dosiermoduls für einen Hilfsstoff, insbesondere für eine Harnstoff-Wasser-Lösung (HWL), dahingehend zu optimieren, dass eine effiziente Kühlung mit möglichst einfachen Mitteln erreicht wird.

Zur Lösung der Aufgabe wird der Kühlmittelkreis mit den Merkmalen des Anspruchs 1 vorgeschlagen. Vorteilhafte Weiterbildungen der Erfindung sind den Unteransprüchen zu entnehmen. Ferner wird zur Lösung der Aufgabe ein Verfahren zur Kühlung eines Dosiermoduls vorgeschlagen.

### Offenbarung der Erfindung

Der vorgeschlagene Kühlmittelkreis weist ein integriertes Dosiermodul für einen Hilfsstoff, insbesondere für eine Harnstoff-Wasser-Lösung (HWL), auf. Das Dosiermodul ist dabei an einem Abgasrohr eines Verbrennungsmotors angeordnet und weist einen Kühlkörper auf, der über einen Einlass und einen Auslass an den Kühlmittelkreis angebunden ist, so dass der Kühlkörper im Betrieb des Verbrennungsmotors von einem Kühlmittel des Kühlmittelkreises durchströmt wird. Der Kühlmittelkreis umfasst ferner eine in den Kühlmittelkreis eingebundene Wärmesenke und/oder Wärmequelle. Erfindungsgemäß ist in der Einbaulage des Dosiermoduls der Auslass des Kühlkörpers näher am Abgasrohr angeordnet als der Einlass.

Durch die vorgeschlagene Anordnung der als Auslass und als Einlass dienenden Kühlmittelanschlüsse des Kühlkörpers des Dosiermoduls ist der abgasrohrnahe Anschluss bzw. der Auslass stets wärmer als der abgasrohrferne Anschluss bzw. der Einlass. Auf diese Weise kann eine natürliche Zirkulation des Kühlmittels im Kühlmittelkreislauf bewirkt werden, die auf Konvektion beruht. Eine Pumpe ist in diesem Fall entbehrlich. Folglich kann auch eine Kühlung erzielt werden, wenn es sich bei dem Kühlmittelkreis um den Kühlmittelkreis des Verbrennungsmotors handelt und dieser nebst Kühlmittelpumpe nach längerem Betrieb abgestellt wird. Wird der Kühlmittelkreis des Verbrennungsmotors zur Kühlung des Dosiermoduls verwendet, kann auf einen separaten Kühlmittelkreis verzichtet werden, wodurch die Effizienz der Kühlung gesteigert wird. Ferner können Kosten und Bauraum eingespart werden.

Die Effizienz der Kühlung kann weiter gesteigert werden, wenn die Komponenten des Kühlmittelkreises in einer die Konvektion fördernden Weise verbunden werden. Hierzu gehört zum Einen die abgasrohrnahe Anordnung des Auslasses des Kühlkörpers des Dosiermoduls, zum Anderen die Orientierung und/oder Anbindung des Auslasses an den Kühlmittelkreis.

Bevorzugt ist der Auslass des Kühlkörpers des Dosiermoduls an einer Oberseite des Kühlkörpers angeordnet. Das heißt, dass sich der Auslass in der Einbaulage des Dosiermoduls an einer geodätisch hochgelegenen, vorzugsweise an der geodätisch höchstliegenden Stelle befindet. Auf diese Weise steigt verdampftes Kühlmittel, das eine geringere Dichte als flüssiges Kühlmittel besitzt, von allein in den Auslass auf.

Alternativ oder ergänzend wird vorgeschlagen, dass der Auslass mit einer zumindest anfänglich ansteigenden Kühlmittelleitung verbunden ist. Die Kühlmittelleitung fördert somit ein Aufsteigen des verdampften Kühlmittels. Insbesondere erleichtert die ansteigende Kühlmittelleitung ein Entweichen des Kühlmitteldampfs aus dem Kühlkörper. Über die Kühlmittelleitung wird der Kühlmitteldampf vom Abgasrohr weggeführt, so dass sich das Kühlmittel über die kältere Umgebung abkühlt und kondensiert. Im weiteren Verlauf kann demnach die Kühlmittelleitung weiter ansteigend, auf gleicher Höhe bleibend oder absteigend ausgeführt werden. Der weitere Verlauf der Kühlmittelleitung kann insbesondere davon abhängig gemacht werden, ob die Kühlmittelleitung zur Wärmesenke oder zur Wärmequelle führt.

Während der Kühlmitteldampf über den Auslass des Kühlkörpers in die Kühlmittelleitung aufsteigt, wird über den abgasrohrfern angeordneten Einlass des Kühlkörpers flüssiges Kühlmittel aus einer weiteren Kühlmittelleitung angesaugt. Der Einlass und/oder die weitere Kühlmittelleitung kann bzw. können dabei ebenfalls an einer Oberseite des Kühlkörpers, das heißt an einer geodätisch hochgelegenen bzw. der geodätisch höchstgelegenen Stelle, angeordnet sein. Auf diese Weise kann das flüssige Kühlmittel schwerkraftgetrieben in den Kühlkörper rückgeführt werden. Eine Anordnung des Einlasses und/oder der weiteren Kühlmittelleitung an der Oberseite des Kühlkörpers ist jedoch nicht zwingend erforderlich, sondern lediglich vorteilhaft. Darüber hinaus kann die Lage und/oder der Verlauf der weiteren Kühlmittelleitung davon abhängig gemacht werden, ob sie der Verbindung des Einlasses mit der Wärmesenke oder der Wärmequelle des Kühlmittelkreises dient.

Gemäß einer ersten bevorzugten Ausgestaltung der Erfindung ist in den erfindungsgemäßen Kühlmittelkreis eine Wärmesenke integriert. Bei der Wärmesenke kann es sich beispielsweise um einen Wärmetauscher oder einen Kühler handeln.

Ferner wird vorgeschlagen, dass die in den Kühlmittelkreis integrierte Wärmesenke einen ersten Kühlmittelanschluss für zulaufendes Kühlmittel und einen zweiten Kühlmittelanschluss für ablaufendes Kühlmittel aufweist, wobei in Einbaulage der Wärmesenke der erste Kühlmittelanschluss oberhalb des zweiten Kühlmittelanschlusses angeordnet ist. Sofern über den Auslass und die an den Auslass anschließende Kühlmittelleitung der Wärmesenke noch dampfförmiges Kühlmittel zugeführt wird, kondensiert dieses im Bereich der Wärmesenke. Zugleich wird das Kühlmittel weiter heruntergekühlt und über die weitere Kühlmittelleitung und den Einlass zurück in den Kühlkörper geführt. Durch die vorgeschlagene Lage der Kühlmittelanschlüsse der Wärmesenke zueinander bzw. in Bezug auf die Wärmesenke kann auch hier die Schwerkraft zur Unterstützung der Zirkulation genutzt werden. Insbesondere kann ein Kühlmittelkreis geschaffen werden, der analog einer Thermosiphonkühlung eigenständig von dem Kühlmittel durchströmt wird.

Gemäß einer zweiten bevorzugten Ausgestaltung der Erfindung ist in den erfindungsgemäßen Kühlmittelkreis eine Wärmequelle integriert. Bei der Wärmequelle kann es sich beispielsweise um den Verbrennungsmotor handeln.

Darüber hinaus wird vorgeschlagen, dass die in den Kühlmittelkreis integrierte Wärmequelle einen ersten Kühlmittelanschluss für zulaufendes Kühlmittel und einen zweiten Kühlmittelanschluss für ablaufendes Kühlmittel aufweist, wobei in Einbaulage der Wärmequelle der zweite Kühlmittelanschluss oberhalb des ersten Kühlmittelanschlusses angeordnet ist. Das heißt, dass es sich bei der Wärmequelle gegenüber der Wärmesenke umgekehrt verhält. Denn im Bereich der Wärmequelle wird das Kühlmittel erwärmt, verdampft und steigt somit auf. Die vorgeschlagene Lage der Kühlmittelanschlüsse steigert demnach den Thermosiphon-Effekt.

Gemäß einer dritten bevorzugten Ausführungsform der Erfindung sind in den Kühlmittelkreis zur weiteren Effizienzsteigerung sowohl eine Wärmesenke als auch eine Wärmequelle integriert. Die Wärmesenke und die Wärmequelle können dabei parallel oder in Reihe geschaltet sein.

In Weiterbildung der Erfindung wird vorgeschlagen, dass in den Kühlmittelkreis eine Kühlmittelpumpe integriert ist. Hierbei kann es sich insbesondere um eine Kühlmittelpumpe des Verbrennungsmotors handeln, so dass der vorgeschlagene Kühlmittelkreis zur Kühlung des Dosiermoduls und des Verbrennungsmotors einsetzbar ist. Die Kühlmittelpumpe muss derart ausgelegt sein, dass sie auch außerhalb ihres Betriebs, beispielsweise bei abgestelltem Verbrennungsmotor, von Kühlmittel durchströmt werden kann.

Des Weiteren wird vorgeschlagen, dass zwischen dem Einlass und dem Auslass des Kühlkörpers des Dosiermoduls ein Leitblech angeordnet ist. Das Leitblech unterstützt die auf natürlicher Konvektion beruhende Durchströmung des Kühlkörpers.

Vorteilhafterweise ist der Kühlmittelkreis mit Wasser als Kühlmittel gefüllt. Der Kühlmittelkreis kann somit vergleichsweise kostengünstig betrieben werden.

Darüber hinaus wird zur Lösung der eingangs genannten Aufgabe ein Verfahren zur Kühlung eines in einen Kühlmittelkreis integrierten Dosiermoduls für einen Hilfsstoff, insbesondere für eine Harnstoff-Wasser-Lösung (HWL), vorgeschlagen. Bei dem Verfahren wird ein Kühlkörper des Dosiermoduls von einem im Kühlmittelkreis zirkulierenden Kühlmittel durchströmt. Zur Förderung einer eigenständigen auf Konvektion beruhenden Durchströmung des Kühlkörpers wird erfindungsgemäß ein Auslass des Kühlkörpers näher an einem Abgasrohr eines Verbrennungsmotors angeordnet als ein Einlass des Kühlkörpers. Dadurch ist sichergestellt, dass sich im Bereich des Abgasrohrs befindliches Kühlmittel erwärmt, verdampft und in den Auslass aufsteigt, während über den Einlass flüssiges Kühlmittel angesaugt wird.

Ferner wird vorgeschlagen, dass in den Kühlmittelkreis eine Wärmesenke und/oder eine Wärmequelle eingebunden werden, um eine Kühlung analog einer Thermosiphon-Kühlung zu erzielen. Auf diese Weise kann die Effizienz des Systems weiter gesteigert werden, da die Zirkulation des Kühlmittels im Kühlmittelkreis allein auf natürlicher Konvektion beruht.

Bevorzugte Ausführungsformen der Erfindung werden nachfolgend anhand der beigefügten Zeichnungen näher erläutert. Diese zeigen:
Fig. 1 eine schematische Darstellung eines Kühlmittelkreises gemäß einer ersten bevorzugten Ausführungsform der Erfindung,
Fig. 2 eine schematische Darstellung eines Kühlmittelkreises gemäß einer zweiten bevorzugten Ausführungsform der Erfindung,
Fig. 3 eine schematische Darstellung eines Kühlmittelkreises gemäß einer dritten bevorzugten Ausführungsform der Erfindung und
Fig. 4 einen schematischen Längsschnitt durch ein Dosiermodul für einen erfindungsgemäßen Kühlmittelkreis.

### Ausführliche Beschreibung der Zeichnungen

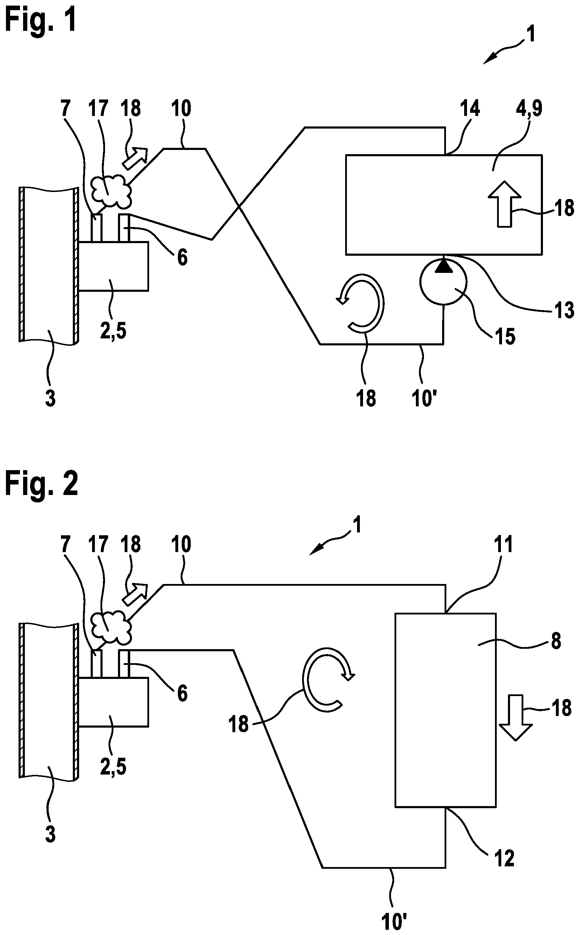

Der Fig. 1 ist ein Kühlmittelkreis 1 mit integriertem Dosiermodul 2 für einen Hilfsstoff, insbesondere für eine Harnstoff-Wasser-Lösung (HWL), zu entnehmen. Mit Hilfe des Dosiermoduls 2 kann der Hilfsstoff in ein Abgasrohr 3 eines Verbrennungsmotors 4 eindosiert werden. Sofern es sich bei dem Hilfsstoff um eine Harnstoff-Wasser-Lösung (HWL) handelt, dient der Hilfsstoff als Reduktionsmittel bei der Nachbehandlung von Abgasen des Verbrennungsmotors 4 in einem nachgeschalteten SCR-Katalysator (nicht dargestellt).

Durch die Anordnung des Dosiermoduls 2 am Abgasrohr 3 ist das Dosiermodul 2 hohen thermischen Belastungen ausgesetzt. Zur Einhaltung kritischer Bauteiltemperaturen wird daher das Dosiermodul 2 gekühlt. Ein im Kühlmittelkreis 1 zirkulierendes Kühlmittel wird hierzu durch einen Kühlkörper 5 des Dosiermoduls 2 geführt. Der Kühlkörper 5 weist hierzu zwei Kühlmittelanschlüsse auf, und zwar einen Einlass 6 und einen Auslass 7. Der Auslass 7 ist über eine Kühlmittelleitung 10 mit einer ebenfalls in den Kühlmittelkreis 1 integrierten Wärmequelle 9 verbunden, wobei vorliegend der Verbrennungsmotor 4 als Wärmequelle 9 dient. Der Anschluss an die Kühlmittelleitung 10 erfolgt dabei über einen ersten Kühlmittelanschluss 13. Ferner ist die Wärmequelle 9 über einen zweiten Kühlmittelanschluss 14 und eine Kühlmittelleitung 10' mit dem Einlass 6 des Kühlkörpers 5 verbunden. In die Kühlmittelleitung 10' ist zudem eine Kühlmittelpumpe 15 integriert. Diese ist derart ausgelegt, dass sie auch außerhalb ihres Betriebs von Kühlmittel durchströmbar ist.

Wird der Verbrennungsmotor 4 abgestellt, kann während der Nachhitze mit Hilfe des dargestellten Kühlmittelkreises 1 eine Kühlung des Dosiermoduls 2 allein mittels Konvektion erreicht werden. Das heißt, dass auch ohne den Betrieb der Kühlmittelpumpe eine Zirkulation des Kühlmittels im Kühlmittelkreis 1 bewirkbar ist. Dies ist darauf zurückzuführen, dass der Auslass 7 des Kühlkörpers 5 näher am Abgasrohr 3 angeordnet ist als der Einlass 6, so dass sich im Auslass 7 befindliches Kühlmittel erwärmt, verdampft und als Kühlmitteldampf 17 den Kühlkörper 5 verlässt, während über den Einlass 6 flüssiges Kühlmittel angesaugt wird.

Die Zirkulation (siehe Pfeile 18) des Kühlmittels bzw. die Durchströmung des Kühlkörpers 5 wird ferner dadurch unterstützt, dass die mit dem Auslass 7 verbundene Kühlmittelleitung 10 zunächst ansteigend ausgebildet ist. Nimmt die Entfernung der Kühlmittelleitung 10 zum Abgasrohr 3 zu, kühlt der Kühlmitteldampf 17 ab und kondensiert. Da die Kühlmittelleitung 10 im weiteren Verlauf absteigend ausgebildet ist, wird nunmehr das Kühlmittel schwerkraftgetrieben der Wärmequelle 9 zugeführt. Der erste Kühlmittelanschluss 13 ist dementsprechend in einem unteren Bereich der Wärmequelle 9 angeordnet. Der dargestellte Kühlmittelkreis 1 ist demnach analog einer Thermosiphonkühlung aufgebaut, wobei der Thermosiphon-Effekt und damit die Effizienz der Kühlung durch die vorgeschlagene Leitungsführung und/oder Anschlussanordnung weiter gesteigert wird.

Der Fig. 2 ist eine weitere bevorzugte Ausführungsform eines erfindungsgemäßen Kühlmittelkreises 1 zu entnehmen. Hier ist anstelle einer Wärmequelle 9 eine Wärmesenke 8 in den Kühlmittelkreis 1 integriert. Da das Kühlmittel im Bereich der Wärmesenke 8 weiter gekühlt wird, wird die Schwerkraft als treibende Kraft genutzt und das Kühlmittel über einen ersten "oberen" Kühlmittelanschluss 11 der Wärmesenke 8 zugeführt und über einen zweiten "unteren" Kühlmittelanschluss 12 wieder abgeführt. Das heißt, dass sich die Zirkulationsrichtung ändert (siehe Pfeile 18). Im Übrigen nutzt auch dieser Kühlmittelkreis den Thermosiphon-Effekt.

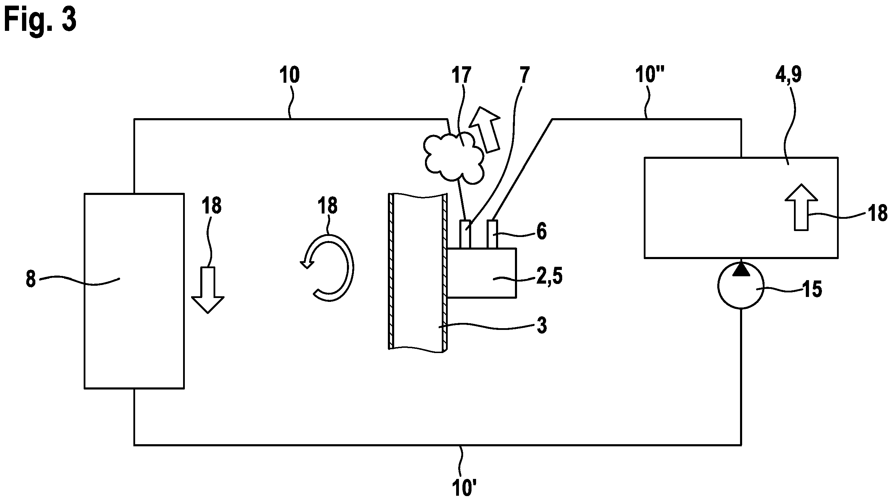

Eine weitere bevorzugte Ausführungsform eines erfindungsgemäßen Kühlmittelkreises 1 ist in der Fig. 3 dargestellt. Hier sind in den Kühlmittelkreis 1 eine Wärmesenke 8 und eine Wärmequelle 9 integriert. Die Wärmesenke 8 und die Wärmequelle 9 sind dabei in Reihe geschaltet, so dass der Kühlmittelkreis 1 entsprechend erweitert wird. Die Zirkulationsrichtung ist wiederum durch Pfeile 18 angedeutet.

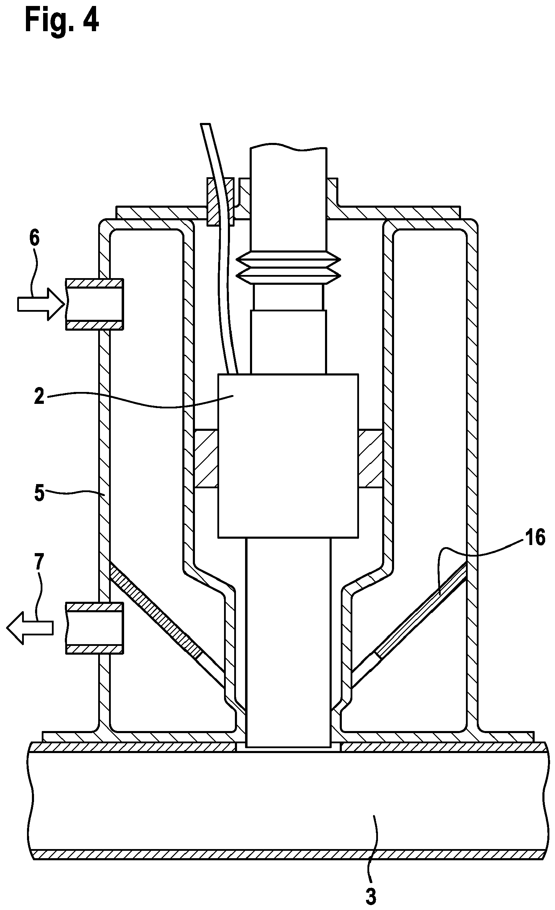

Ein für einen erfindungsgemäßen Kühlmittelkreis 1 geeignetes Dosiermodul 2 ist beispielhaft in der Fig. 4 dargestellt. Es umfasst eine Kühlkörper 5, der im Betrieb des Dosiermoduls 2 von einem Kühlmittel durchströmt wird, um das Dosiermodul 2 zu kühlen. Denn das Dosiermodul 2 ist an einem Abgasrohr 3 eines Verbrennungsmotors 4 angeordnet und hohen thermischen Belastungen ausgesetzt. Der Kühlkörper 5 weist einen Einlass 6 und einen Auslass 7 für das Kühlmittel auf, wobei der Auslass 7 näher am Abgasrohr 3 als der Einlass 6 angeordnet ist. Zwischen dem Einlass 6 und dem Auslass 7 ist zudem ein Leitblech 16 angeordnet.

### Bezugszeichenliste

- 1: Kühlmittelkreis
- 2: Dosiermodul
- 3: Abgasrohr
- 4: Verbrennungsmotor
- 5: Kühlkörper
- 6: Einlass
- 7: Auslass
- 8: Wärmesenke
- 9: Wärmequelle
- 10: Kühlmittelleitung
- 11: Kühlmittelanschluss
- 12: Kühlmittelanschluss
- 13: Kühlmittelanschluss
- 14: Kühlmittelanschluss
- 15: Kühlmittelpumpe
- 16: Leitblech
- 17: Kühlmitteldampf

## Patentansprüche

1. Kühlmittelkreis (1) mit einem integrierten Dosiermodul (2) für einen Hilfsstoff, insbesondere für eine Harnstoff-Wasser-Lösung (HWL), wobei das Dosiermodul (2) an einem Abgasrohr (3) eines Verbrennungsmotors (4) angeordnet ist und einen Kühlkörper (5) aufweist, der über einen Einlass (6) und einen Auslass (7) an den Kühlmittelkreis angebunden ist, so dass der Kühlkörper (5) im Betrieb des Verbrennungsmotors (4) von einem Kühlmittel des Kühlmittelkreises (1) durchströmt wird, ferner umfassend eine in den Kühlmittelkreis eingebundene Wärmesenke (8) und/oder Wärmequelle (9),
**dadurch gekennzeichnet, dass** in der Einbaulage des Dosiermoduls (2) der Auslass (7) des Kühlkörpers (5) näher am Abgasrohr (3) angeordnet ist als der Einlass (6).

2. Kühlmittelkreis (1) nach Anspruch 1,
**dadurch gekennzeichnet, dass** der Auslass (7) an einer Oberseite des Kühlkörpers (5) angeordnet ist und/oder mit einer zumindest anfänglich ansteigenden Kühlmittelleitung (10) verbunden ist.

3. Kühlmittelkreis (1) nach Anspruch 1 oder 2,
**dadurch gekennzeichnet, dass** die in den Kühlmittelkreis (1) integrierte Wärmesenke (8) einen ersten Kühlmittelanschluss (11) für zulaufendes Kühlmittel und einen zweiten Kühlmittelanschluss (12) für ablaufendes Kühlmittel aufweist, wobei in Einbaulage der Wärmesenke (8) der erste Kühlmittelanschluss (11) oberhalb des zweiten Kühlmittelanschlusses (12) angeordnet ist.

4. Kühlmittelkreis (1) nach einem der vorhergehenden Ansprüche,
**dadurch gekennzeichnet, dass** die in den Kühlmittelkreis (1) integrierte Wärmequelle (9) einen ersten Kühlmittelanschluss (13) für zulaufendes Kühlmittel und einen zweiten Kühlmittelanschluss (14) für ablaufendes Kühlmittel aufweist, wobei in Einbaulage der Wärmequelle (9) der zweite Kühlmittelanschluss (14) oberhalb des ersten Kühlmittelanschlusses (13) angeordnet ist.

5. Kühlmittelkreis (1) nach einem der vorhergehenden Ansprüche,
**dadurch gekennzeichnet, dass** sowohl eine Wärmesenke (8) als auch eine Wärmequelle (9) in den Kühlmittelkreis (1) integriert sind, wobei die Wärmesenke (8) und die Wärmequelle (9) parallel oder in Reihe geschaltet sind.

6. Kühlmittelkreis (1) nach einem der vorhergehenden Ansprüche,
**dadurch gekennzeichnet, dass** in den Kühlmittelkreis (1) eine Kühlmittelpumpe (15) integriert ist.

7. Kühlmittelkreis (1) nach einem der vorhergehenden Ansprüche,
**dadurch gekennzeichnet, dass** zwischen dem Einlass (6) und dem Auslass (7) des Kühlkörpers (5) des Dosiermoduls (2) ein Leitblech (16) angeordnet ist.

8. Kühlmittelkreis (1) nach einem der vorhergehenden Ansprüche,
**dadurch gekennzeichnet, dass** der Kühlmittelkreis (1) mit Wasser als Kühlmittel gefüllt ist.

9. Verfahren zur Kühlung eines in einen Kühlmittelkreis (1) integrierten Dosiermoduls (2) für einen Hilfsstoff, insbesondere für eine Harnstoff-Wasser-Lösung (HWL), bei dem ein Kühlkörper (5) des Dosiermoduls (2) von einem im Kühlmittelkreis (1) zirkulierenden Kühlmittel durchströmt wird,
**dadurch gekennzeichnet, dass** zur Förderung einer eigenständigen auf Konvektion beruhenden Durchströmung des Kühlkörpers (5) ein Auslass (7) des Kühlkörpers (5) näher an einem Abgasrohr (3) eines Verbrennungsmotors (4) angeordnet wird als ein Einlass (6) des Kühlkörpers (5).

10. Verfahren nach Anspruch 9,
**dadurch gekennzeichnet, dass** in den Kühlmittelkreis (1) eine Wärmesenke (8) und/oder eine Wärmequelle (9) eingebunden werden.
